# EUROPÄISCHE PATENTSCHRIFT

(11) **EP 3 807 453 B1**
(45) Veröffentlichungstag und Bekanntmachung des Hinweises auf die Patenterteilung: **03.08.2022**
(21) Anmeldenummer: 19729247.7
(22) Anmeldetag: 05.06.2019
(51) Int. Cl.: D01D 13/00, G05B 13/02, D01D 5/08

(54) **VERFAHREN ZUR STEUERUNG EINES SCHMELZSPINNPROZESSES SOWIE EINE SCHMELZSPINNVORRICHTUNG**
METHOD FOR CONTROLLING A MELT SPINNING PROCESS AND MELT SPINNING APPARATUS
PROCÉDÉ DE COMMANDE D'UN PROCESSUS DE FILATURE PAR FUSION ET DISPOSITIF DE FILATURE PAR FUSION

(30) Priorität: 13.06.2018 DE 102018004773
(43) Veröffentlichungstag der Anmeldung: 21.04.2021
(73) Patentinhaber: BB Engineering GmbH, 42897 Remscheid (DE)
(72) Erfinder: SCHÄFER, Klaus, 42897 Remscheid (DE)
(74) Vertreter: Neumann, Ditmar
(86) Internationale Anmeldenummer: PCT/EP2019/064577
(87) Internationale Veröffentlichungsnummer: WO 2019/238480

(56) Entgegenhaltungen:
- US-A1- 2008 315 446
- US-B2- 7 526 463

## Beschreibung

Die Erfindung betrifft ein Verfahren zur Steuerung eines Schmelzspinnprozesses gemäß dem Anspruch 1 sowie eine Schmelzspinnvorrichtung zur Herstellung von Fäden gemäß dem Anspruch 7.

Bei der Herstellung von synthetischen Fäden in einem Schmelzspinnprozess beeinflussen eine Vielzahl von einzelnen Prozessschritten wie Schmelzeerzeugung, Filamentextrusion, Fadenbehandlung und Fadenaufwicklung die Qualität der Fäden. Dabei ist jeder einzelne Prozessschritt seinerseits von Prozessparametern beeinflussbar. Insoweit werden eine Vielzahl von Maschinenkomponenten genutzt, die über Aktoren und Sensoren verfügen, um die Prozessschritte sowie eine Qualität des herzustellenden Fadens in der gewünschten Art und Weise zu beeinflussen. Jeder der Prozessschritte ist durch zugeordnete Steuerkomponenten steuerbar, die gemeinsam in einer Maschinensteuereinrichtung verbunden sind. So lassen sich die einzelnen Prozessschritte unabhängig voneinander steuern. Derartige Verfahren zur Steuerung eines Schmelzspinnprozesses sowie derartige Schmelzspinnvorrichtungen sind beispielsweise aus der DE 10 2004 052 669 A1, der US 2008/315446 A1 und der US 7 526 463 B2 bekannt.

Bei den bekannten Verfahren zur Steuerung eines Schmelzspinnprozesses und den bekannten Schmelzspinnvorrichtungen wird die Qualität des Fadens durch Überwachung eines Zustandsparameters des Fadens gewährleistet. Hierzu werden die jeweiligen Ist-Zustandsparameter, die an den Fäden gemessen wurden, erfasst und gemeinsam mit den Prozessparametern der Prozessschritte analysiert. So lassen sich bei veränderten Zustandswerten mögliche Qualitätsverschlechterungen des Prozesses schnell erkennen und ggf. Rückschlüsse auf mögliche Ursachen hervorbringen.

Bei den bekannten Verfahren zur Steuerung eines Schmelzspinnprozesses und der bekannten Schmelzspinnvorrichtung erleichtern derartige Analysen die Bedienbarkeit, so dass eine Bedienperson aufgrund eigener Erfahrungen einen schnellen und gezielten Eingriff zur Veränderung einer oder mehrerer Prozessschritte vornehmen kann. Hierbei ist die Prozessverbesserung jedoch im Wesentlichen davon abhängig, welche Erfahrungen der Maschinenbediener zur Steuerung eines Schmelzspinnprozesses hat.

Es ist nun Aufgabe der Erfindung, ein gattungsgemäßes Verfahren zur Steuerung eines Schmelzspinnprozesses sowie eine gattungsgemäße Schmelzspinnvorrichtung zu schaffen, bei welcher die Fadenqualität sowie die Produktivität der Fadenherstellung ohne Eingriff einer Bedienperson möglichst auf einem hohen Niveau haltbar sind.

Diese Aufgabe wird erfindungsgemäß mit dem Verfahren dadurch gelöst, dass aus den Ist-Werten der Zustandsparameter und den Ist-Werten der Prozessparameter zumindest ein Soll-Wert einer der Prozessparameter ermittelt wird und bei welcher der betreffende Prozessschritt automatisiert zur Einstellung des Soll-Wertes des Prozessparameters umgesteuert wird.

Bei der erfindungsgemäßen Schmelzspinnvorrichtung wird die Lösung der Aufgabe dadurch erreicht, dass der Maschinensteuereinrichtung ein Umsteuermodul zugeordnet ist, durch welches aus den Ist-Werten der Zustandsparameter und den Ist-Werten der Prozessparameter zumindest ein Steuerbefehl zur automatisierten Umsteuerung eines der Prozessschritte einer der Einrichtungen auf einen Soll-Wert einer der Prozessparameter generierbar ist.

Vorteilhafte Weiterbildungen der Erfindung sind durch die Merkmale und Merkmalskombinationen der jeweiligen Unteransprüche definiert.

Die Erfindung zeichnet sich dadurch aus, dass aus dem Ist-Zustand des Schmelzspinnprozesses sowie der Fadenqualität unmittelbar zumindest ein Soll-Wert einer der Prozessparameter zur Steuerung der Prozessschritte ermittelt wird. Hierzu können spezielle Analysealgorithmen genutzt werden, um eine umfassende Datenverknüpfung zwischen den Prozessparametern und den Zustandsparametern vornehmen zu können. Eine automatisierte Umsteuerung des jeweilig betreffenden Prozessschrittes ermöglicht schnelle Reaktionszeiten, um unerwünschte Abweichungen im Herstellungsprozess des Fadens zu kompensieren.

Die Analysen der Ist-Werte der Zustandsparameter und Ist-Werte der Prozessparameter wird vorzugsweise in einem Umsteuermodul vorgenommen, welches der Maschinensteuerung zugeordnet ist und somit unmittelbar generierte Steuerbefehle zur automatischen Umsteuerung eines der Prozessschritte direkt umsetzbar sind. Durch das Umsteuermodul werden die Soll-Werte der Prozessparameter und somit die Steuerbefehle generiert, die automatisiert von der Maschinensteuerung an den jeweiligen Steuerkomponenten der Einrichtungen der Schmelzspinnvorrichtung aufgegeben werden. Damit sind eine automatisierte Steuerung des Schmelzspinnprozesses sowie der Schmelzspinnvorrichtung ausführbar.

Aufgrund der Komplexität eines Schmelzspinnprozesses ist die Verfahrensvariante bevorzugt ausgeführt, bei welcher die Prozessparameter und die Zustandsparameter fortlaufend überwacht werden, bei welcher aus den jeweiligen Ist-Werten der Prozessparameter und den jeweiligen Ist-Werten der Zustandsparameter weitere Soll-Werte der Prozessparameter bestimmt werden und bei welchem die betreffenden Prozessschritte automatisiert zur Einstellung der Prozessparameter umgesteuert werden. So lassen sich parallel direkt mehrere Prozessschritte mit den generierten Soll-Werten der Prozessparameter ausführen.

Hierbei hat sich die Verfahrensvariante besonders bewährt, bei welcher der Soll-Wert des Prozessparameters durch ein Maschinenlernprogramm aus den Ist-Werten der Prozessparameter und den Ist-Werten der Zustandsparameter bestimmt wird. Derartige Maschinenlernprogramme verfügen über eine künstliche Intelligenz, die sich insbesondere zur Automatisierung von Prozessen eignet. So lassen sich durch das Maschinenlernprogramm menschenähnliche Entscheidungsstrukturen nachbilden, um aus den Analysen der Ist-Werte der Prozessparameter und der Ist-Werte der Zustandsparameter geeignete Soll-Werte der Prozessparameter zu ermitteln. Durch den Selbstlerneffekt derartiger Maschinenlernprogramme wird zudem eine ständige Verbesserung bei der Bestimmung der Soll-Werte der Prozessparameter erreicht.

Um insbesondere bei Beginn des Prozesses eine gewisse Prozessstabilität zu gewährleisten, ist die Verfahrensvariante bevorzugt ausgeführt, bei welcher die Prozessschritte und / oder die Prozessparameter, die zu einer automatisierten Steuerung freigegeben sind, dem Maschinenlernprogramm vorgegeben sind. Damit können beispielsweise Prozessparameter einer Schmelzeerzeugung für die automatisierte Umsteuerung gesperrt werden, da üblicherweise eine Vielzahl von Spinnpositionen gleichzeitig davon betroffen ist. So lassen sich die zur automatisierten Steuerung freigegebenen Prozessschritte oder Prozessparameter definieren, um beispielsweise nur innerhalb einer Spinnposition die Prozessänderungen zu erhalten.

Als äußerst effektiv und dabei leicht detektierbar hat sich als Zustandsparameter ein Auftreten eines Fadenbruchs an einem der Fäden besonders bewährt. So ist es allgemein bekannt, dass eine Anzahl der Fadenbrüche pro Fadenmassen üblicherweise als ein Qualitätsparameter genutzt wird. Dieser Qualitätsparameter lässt sich daher zur Beurteilung des Schmelzspinnprozesses heranziehen.

Im Hinblick auf die Nutzung einer Maschinenintelligenz ist die Verfahrensvariante besonders vorteilhaft, bei welcher in einer Anlaufphase des Schmelzspinnprozesses eine Umsteuerung der Prozessschritte zulässig ist, die zu eine Verschlechterung des Qualitätsparameters führt. Derartige automatisierte Umsteuerungen der Prozessschritte sind unausweichlich, wenn ein Lernprozess zur stetigen Verbesserung des Maschinenlernprogramms erforderlich ist. So können daraus Erfahrungswerte generiert werden, die im weiteren Verlauf des Prozesses zur Stabilität oder Verbesserung führen.

Um nach Möglichkeit den in einer Lernphase verursachten Ausschuss gering zu halten, ist des Weiteren vorgesehen, dass nach Ablauf der Anlaufphase des Schmelzspinnprozesses die Umsteuerung der Prozessschritte zulässig ist, die zu einer Einhaltung oder Verbesserung des Qualitätsparameters führt.

Das erfindungsgemäße Verfahren zur Steuerung eines Schmelzspinnprozesses und die erfindungsgemäße Schmelzspinnvorrichtung basieren darauf, dass zumindest der Zustandsparameter eines Fadenbruchs an dem Faden kontinuierlich überwacht wird. Grundsätzlich besteht jedoch auch die Möglichkeit, als zusätzlichen Zustandsparameter beispielsweise ein Grad der Benetzung des Fadens, eine Anzahl von Flusen an dem Faden oder eine Fadenspannung zu nutzen. Insoweit kann die Überwachungseinrichtung unterschiedliche Sensormittel aufweisen, um die jeweiligen Ist-Werte der Zustandsparameter an den Fäden zu detektieren.

Die Überwachungseinrichtung weist mindestens eine Mehrzahl von Fadenbruchsensoren auf, die direkt mit dem Umsteuermodul verbunden sind. So können die auftretenden Fadenbrüche in dem Herstellungsprozess unmittelbar als Ist-Werte dem Umsteuermodul zugeführt werden.

Für die Analysen und die Generierung von Steuerbefehlen weist das Umsteuermodul bevorzugt ein Maschinenlernprogramm auf, so dass mit Hilfe einer künstlichen Intelligenz die Soll-Werte der Prozessparameter aus den Ist-Werten des Zustandsparameters und den Ist-Werten der Prozessparameter erzeugbar sind.

Das erfindungsgemäße Verfahren zur Steuerung eines Schmelzspinnprozesses wird nachfolgend anhand eines Ausführungsbeispiels der erfindungsgemäßen Schmelzspinnvorrichtung unter Bezug auf die beigefügten Figuren näher erläutert.

Es stellen dar:
Fig. 1 schematisch ein erstes Ausführungsbeispiel einer Schmelzspinnvorrichtung zur Herstellung synthetischer Fäden
Fig. 2 schematisch eine der Spinnpositionen des Ausführungsbeispiels aus Fig. 1

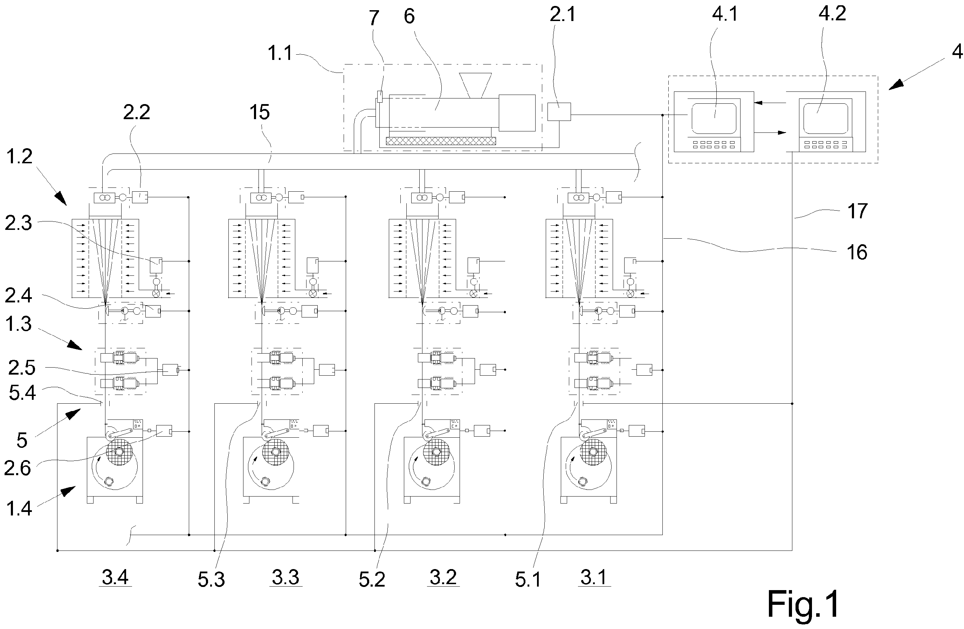

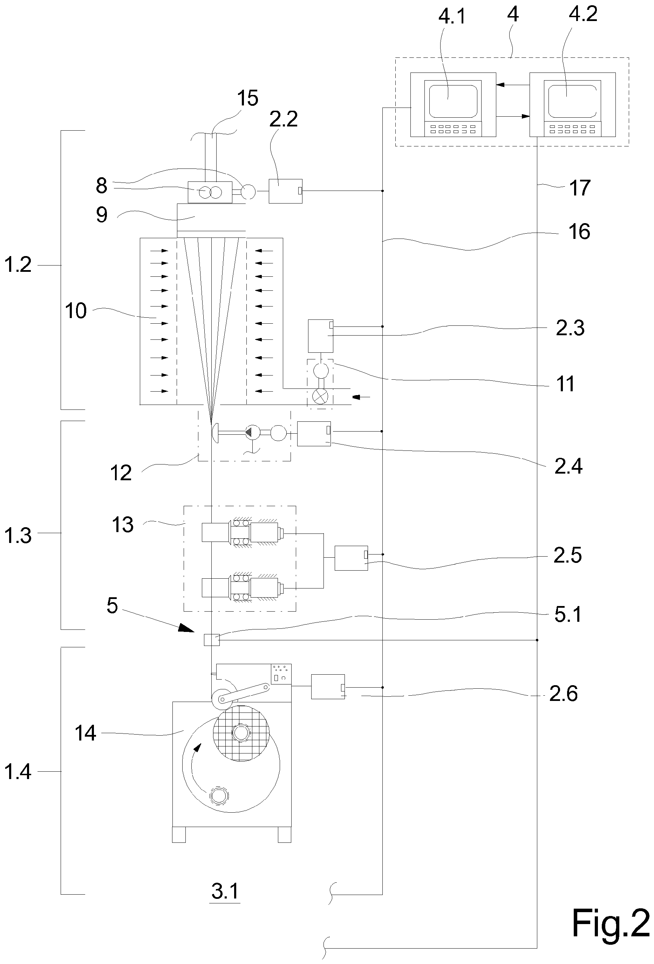

In den Fig. 1 und 2 ist ein erstes Ausführungsbeispiel einer erfindungsgemäßen Schmelzspinnvorrichtung zur Herstellung synthetischer Fäden in mehreren Ansichten dargestellt. In Fig. 1 ist schematisch eine Gesamtansicht und in Fig. 2 schematisch eine Teilansicht der Schmelzspinnvorrichtung dargestellt. Soweit kein ausdrücklicher Bezug zu einer der Figuren gemacht ist, gilt die nachfolgende Beschreibung für beide Figuren.

Die Schmelzspinnvorrichtung weist eine Vielzahl von Einrichtungen auf, um den Schmelzspinnprozess zur Herstellung synthetischer Fäden ausführen zu können. Eine erste Schmelzeerzeugereinrichtung 1.1 wird durch einen Extruder 6 gebildet, der über ein Schmelzeleitungssystem 15 mit einer Mehrzahl von Spinnpositionen 3.1 bis 3.4 verbunden ist. In der Fig. 1 sind beispielhaft nur vier Spinnpositionen 3.1 bis 3.4 dargestellt. In Praxis können derartige Schmelzspinnvorrichtung eine Mehrzahl von derartigen Spinnpositionen aufweisen.

Die Spinnpositionen 3.1 bis 3.4 sind identisch aufgebaut und in Fig. 2 schematisch dargestellt. Innerhalb der Spinnpositionen 3.1 bis 3.4 sind jeweils eine Schmelzspinneinrichtung 1.2, eine Behandlungseinrichtung 1.3 und eine Aufwickeleinrichtung 1.4 vorgesehen, um das Schmelzspinnen einer Fadenschar innerhalb einer der Spinnpositionen 3.1 bis 3.4 auszuführen. Insoweit wird in jeder der in Fig. 1 dargestellten Spinnpositionen 3.1 bis 3.4 eine Fadenschar von beispielsweise 12, 16 oder 32 Fäden erzeugt. Der Einfachheit halber ist in den Fig. 1 und 2 jeweils nur ein Fadenlauf eines der Fäden gezeigt.

Als Einrichtungen sind in diesem Ausführungsbeispiel die Maschinenteile bezeichnet, die durch Antriebe, Aktoren und Sensoren maßgeblich am Schmelzspinnprozess beteiligt sind. Neben den Antrieben und Aktoren sind auch hier nicht näher dargestellte Sensoren der Einrichtungen zugeordnet, die zur Steuerung des Schmelzspinnprozesses nötig sind. So weist die Spinnposition 3.1 als Schmelzspinneinrichtung 1.2 eine Spinnpumpe 8 und eine Spinndüse 9 auf, die an dem Schmelzeleitungssystem 15 angeschlossen sind. Derartigen Schmelzspinneinrichtungen 1.2 sind üblicherweise ein Drucksensor und ggf. ein Temperatursensor zugeordnet, um den Prozessschritt einer Filamentextrusion durchführen zu können. Unterhalb der Spinndüse 9 ist ein Kühlschacht 10 angeordnet, der an eine Gebläseeinheit 11 zur Bereitstellung einer Kühlluft angeschlossen ist, um die frisch extrudierten Filamente zu kühlen.

Die nächsten Prozessschritte einer Fadenbehandlung werden durch die Behandlungseinrichtung 1.3 ausgeführt, die eine Benetzungsvorrichtung 12 und eine Galetteneinheit 13 umfasst. Am Ende des Schmelzspinnprozesses werden die Fäden zu Spulen gewickelt. Hierzu wird der letzte Prozessschritt einer Aufwicklung durch die Aufwickeleinrichtung 1.4 ausgeführt, die durch eine Aufspulmaschine 14 gebildet ist.

Innerhalb der Spinnpositionen 3.1 bis 3.4 sind den Maschinenkomponenten der Schmelzspinneinrichtung 1.2, der Behandlungseinrichtung 1.3 und der Aufwickeleinrichtung 1.4 separate Steuereinheiten 2.2 bis 2.6 zugeordnet. So ist die Steuereinheit 2.2 der Schmelzspinneinrichtung 1.2 zugeordnet, um die Spinnpumpe 8 zu steuern. Die hier nicht näher dargestellten Sensoren der Schmelzspinneinrichtung 1.2 werden ebenfalls mit der Steuereinheit 2.2 verbunden. Eine weitere Steuereinheit 2.3 ist der Gebläseeinheit 11 zugeordnet, durch welche die Kühlluftversorgung gesteuert wird.

Der nachfolgenden Behandlungseinrichtung 1.3 sind die Steuereinheiten 2.4 und 2.5 zugeordnet, wobei die Steuereinheit 2.4 die Benetzungsvorrichtung 12 und die Steuereinheit 2.5 die Galetteneinheit 13 steuert. Die Aufspulmaschine 14 der Aufwickeleinrichtung 1.4 wird durch die Steuereinheit 2.6 gesteuert.

Zur Kommunikation und Datenübertragung sind die Steuereinheiten 2.2 bis 2.6 über ein BUS-Leitungssystem 16 mit einem Steuermodul 4.1 einer Maschinensteuereinrichtung 4 verbunden. Die Maschinensteuereinrichtung 4 weist neben dem Steuermodul 4.1 ein Umsteuermodul 4.2 auf, das über eine Datenleitung 17 mit einer Überwachungseinrichtung 5 verbunden ist.

Wie aus der Darstellung in Fig. 1 hervorgeht, weist die Überwachungseinrichtung 5 mehrere Fadenbruchsensoreinrichtungen 5.1 bis 5.4 auf, die auf die einzelnen Spinnpositionen 3.1 bis 3.4 verteilt angeordnet sind. Die Fadenbruchsensoreinrichtungen 5.1 bis 5.4 weisen innerhalb der Spinnpositionen 3.1 bis 3.4 jeweils separate Fadenbruchsensoren auf, um jeden der in der Spinnposition hergestellten Fäden zu detektieren. Hierbei wird mittels der Fadenbruchsensoreinrichtungen 5.1 bis 5.4 ein Fadenbruch als Zustandsparameter des jeweiligen Fadens erfasst und über die Datenleitung 17 dem Umsteuermodul 4.2 der Maschinensteuereinrichtung 4 zugeführt.

Wie des Weiteren aus Fig. 1 ersichtlich ist, sind die Steuereinheiten 2.2 bis 2.6 der Spinnpositionen 3.1 bis 3.4 gemeinsam über das BUS-Leitungssystem 16 mit dem Steuermodul 4.1 der Maschinensteuereinrichtung 4 verbunden. So lassen sich Ist-Werte der eigestellten Prozessparameter dem Steuermodul 4.1 zuführen. Zudem lässt sich über das Steuermodul 4.1 Soll-Werte der Prozessparameter den Steuereinheiten 2.2 bis 2.6 aufgeben.

Neben den Steuereinheiten 2.2 bis 2.6 der Spinnpositionen 3.1 bis 3.4 ist eine weitere Steuereinheit 2.1 der Schmelzeerzeugereinrichtung 1.1 zugeordnet und ebenfalls mit dem Steuermodul 4.1 der Maschinensteuereinrichtung 4 verbunden. Insoweit lassen sich über die Steuereinheiten 2.1 bis 2.6 alle Ist-Werte der Prozessparameter, die zur Durchführung der momentanen Prozessschritte an den Einrichtungen 1.1, 1.2, 1.3 und 1.4 eingestellt sind, der Maschinensteuereinrichtung 4 zuführen.

Die Steuereinheit 2.1 ist zudem mit einem Drucksensor 7 verbunden, der auf einer Auslassseite des Extruders 6 einen Schmelzedruck überwacht.

Wie aus der Darstellung in Fig. 1 und 2 hervorgeht, ist das Umsteuermodul 4.2 mit dem Steuermodul 4.1 zur Datenübernahme und Datenübergabe verbunden. So werden alle Ist-Werte der Prozessparameter von dem Steuermodul 4.1 dem Umsteuermodul 4.2 zugeführt. Durch die Datenleitung 17 werden zudem alle Ist-Werte der Zustandsparameter, die durch die Überwachungseinrichtung 5 kontinuierlich erfasst werden, dem Umsteuermodul 4.2 aufgegeben. Innerhalb des Umsteuermoduls 4.2 ist ein Maschinenlernprogramm integriert, das mit Hilfe von Analysealgorithmen aus den Ist-Werten der Prozessparameter und den Ist-Werten der Zustandsparameter zumindest einen Soll-Wert eines der Prozessparameter ermittelt. Der Soll-Wert des Prozessparameters zur Ausführung eines bestimmten Prozessschrittes wird dem Steuermodul 4.1 zugeführt, durch welches eine Umsteuerung des betreffenden Prozessschrittes automatisiert ausführbar ist. So wird über das Steuermodul 4.1 der durch das Umsteuermodul 4.2 ermittelte Soll-Wert des Prozessparameters unmittelbar der betreffenden Steuereinheit 2.1 bis 2.6 zugeführt, die den Steuerbefehl zur Umsteuerung des Prozessschrittes direkt ausführt. Die sich daraufhin veränderten Prozessparameter werden kontinuierlich über die Steuereinheiten 2.2 bis 2.6 als Ist-Werte unmittelbar dem Steuermodul 4.1 und somit dem Umsteuermodul 4.2 zugeführt. Das Maschinenlernprogramm führt somit kontinuierliche Analysen aus, die zu entsprechenden Soll-Werten der Prozessparameter und somit zur automatisierten Steuerung des gesamten Schmelzspinnprozesses führen.

Da bei einem Neustart eines Schmelzspinnprozesses derartige Maschinenlernprogramme eine Lernphase benötigen, um eine stabile Prozessführung zu erzeugen, werden einige Basisdaten zu den Prozessparametern und Zustandsparametern dem Umsteuermodul im Vorfeld aufgegeben. Zudem wird vorzugweise eine Anlaufphase definiert, in welcher die durch das Umsteuermodul initiierten Prozesssteuerungen möglicherweise zu einer Verschlechterung des Prozesses führen könnten und zulässig wären. Der Prozess wird hierbei vorteilhaft anhand eines Qualitätsparameters überwacht, der sich aus den Zustandsparametern, in diesem Fall aus der Anzahl von Fadenbrüchen pro hergestellter Fadenmasse, ermittelt. So ist allgemein gewünscht, dass die Fadenbruchrate möglichst gering ausfällt, so dass lange Betriebszeiten ohne jegliche Unterbrechung erreicht werden. In eine sogenannten Anlaufphase ist daher eine Überschreitung eines vorgegebenen Qualitätswertes, der sich aus der Fadenbruchrate ergibt, zulässig. Erst nach Ablauf einer Anlaufphase des Schmelzspinnprozesses sind durch die Soll-Werteder Prozessparameter, die durch das Umsteuermodul ermittelt werden, und die daraus folgenden Steuerbefehle nur gleichbleibende oder verbesserte Qualitätswerte hinsichtlich der Fadenbruchrate möglich.

Im Hinblick auf eine Prozessstabilität ist zudem vorteilhaft, wenn dem Umsteuermodul 4.2 vor Betriebsbeginn die Prozessparameter und Prozessschritte vorgegeben werden, die bei der automatisierten Maschinensteuerung veränderbar sind. So könnten beispielsweise Prozessänderungen, die die Schmelzeerzeugereinrichtung 1.1 betreffen, an weitere Bedingungen geknüpft werden, da sich Änderungen in den Prozessparametern der Schmelzeerzeugereinrichtung 1.1 auf alle Spinnpositionen 3.1 bis 3.4 auswirkt. Das erfindungsgemäße Verfahren zur Steuerung eines Schmelzspinnprozesses sowie die erfindungsgemäße Schmelzspinnvorrichtung besitzen somit den besonderen Vorteil, dass ein manueller Aufwand zur Steuerung des Prozesses auf ein Minimum reduziert wird. So ist ein Eingriff einer Bedienperson nur dann erforderlich, wenn keine Prozessstabilität nach Ablauf der Anlaufphase erreicht wird.

## Patentansprüche

1. Verfahren zur Steuerung eines Schmelzspinnprozesses zur Herstellung von Fäden, bei welchem mehrere Prozessparameter mehrerer Prozessschritte einer Schmelzerzeugung, einer Filamentextrusion, einer Fadenbehandlung und einer Fadenaufwicklung überwacht werden, bei welchem zu jedem der Fäden zumindest einer von mehreren Zustandsparametern überwacht werden und bei welchem die jeweiligen Ist-Werte der Zustandsparameter und die jeweiligen Ist-Werte der Prozessparameter gemeinsam analysiert werden,
wobei aus den Ist-Werten der Zustandsparameter und den Ist-Werten der Prozessparameter zumindest ein Sollwert eines der Prozessparameter ermittelt wird und dass der betreffende Prozessschritt automatisiert zur Einstellung des Prozessparameters umgesteuert wird,
**dadurch gekennzeichnet, dass** als ein Zustandsparameter ein Auftreten eines Fadenbruchs an einem der Fäden überwacht wird und dass ein Qualitätsparameter durch eine Anzahl der Fadenbrüche pro Fadenmasse bestimmt wird.

2. Verfahren nach Anspruch 1, **dadurch gekennzeichnet, dass** die Prozessparameter und die Zustandsparameter fortlaufend überwacht werden, dass aus den jeweiligen Ist-Werten der Prozessparameter und den jeweiligen Ist-Werten der Zustandsparameter weitere Sollwerte der Prozessparameter bestimmt werden und dass die betreffenden Prozessschritte automatisiert zur Einstellung der Prozessparameter umgesteuert werden.

3. Verfahren nach einem der Ansprüche 1 oder 2, **dadurch gekennzeichnet, dass** der Sollwert des Prozessparameters durch ein Maschinenlernprogramm aus den Ist-Werten der Prozessparameter und den Ist-Werten der Zustandsparameter bestimmt wird.

4. Verfahren nach Anspruch 3, **dadurch gekennzeichnet, dass** die Prozessschritte und/oder die Prozessparameter, die zu einer automatisierten Steuerung freigegeben sind, dem Maschinenlernprogramm vorgegeben werden.

5. Verfahren nach einem der Ansprüche 1 bis 4, **dadurch gekennzeichnet, dass** in einer Anlaufphase des Schmelzspinnprozesses eine Umsteuerung der Prozessschritte zulässig ist, die zu einer Verschlechterung des Qualitätsparameters führt.

6. Verfahren nach Anspruch 5, **dadurch gekennzeichnet, dass** nach Ablauf der Anlaufphase des Schmelzspinnprozesses die Umsteuerung der Prozessschritte zulässig ist, die zu einer Einhaltung oder Verbesserung des Qualitätsparameters führt.

7. Schmelzspinnvorrichtung zur Herstellung von Fäden mit einer Schmelzeerzeugereinrichtung (1.1), einer Schmelzspinneinrichtung (1.2), einer Behandlungseinrichtung (1.3) und einer Aufwickeleinrichtung (1.4) zur Ausführung mehrere Prozessschritte, mit einer Überwachungseinrichtung (5) und mit einer Maschinensteuereinrichtung (4), die mit der Überwachungseinrichtung (5) zum Empfangen von Zustandsparametern und mit den Einrichtungen (1.1, 1.2, 1.3, 1.4) zur Ausführung der Prozessschritte zum Empfangen von Prozessparametern verbunden ist,
wobei die Maschinensteuereinrichtung (4) ein Umsteuermodul (4.2) aufweist, durch welches aus den Ist-Werten der Zustandsparameter und den Ist-Werten der Prozessparameter zumindest ein Steuerbefehl zur automatisierten Umsteuerung eines der Prozessschrittes einer der Einrichtungen (1.1, 1.2, 1.3, 1.4) auf einen Sollwert einer der Prozessparameter generierbar ist,
**dadurch gekennzeichnet, dass** die Überwachungseinrichtung (5) eine Mehrzahl von Fadenbruchsensoreinrichtungen (5.1) aufweist, die mit dem Umsteuermodul (4.2) verbunden sind,
und dass als ein Zustandsparameter ein Auftreten eines Fadenbruchs an einem der Fäden überwacht wird und dass ein Qualitätsparameter durch eine Anzahl der Fadenbrüche pro Fadenmasse bestimmt wird.

8. Schmelzspinnvorrichtung nach Anspruch **dadurch gekennzeichnet, dass** das Umsteuermodul (4.2) ein Maschinenlernprogramm aufweist, durch welche Sollwerte der Prozessparameter aus den Ist-Werten des Zustandsparameters und den Ist-Werten der Prozessparameter erzeugbar sind.

## Claims

1. Method for controlling a melt-spinning process for producing yarns, in which method a plurality of process parameters of a plurality of process steps of melt generation, filament extrusion, yarn treatment and yarn winding are monitored, in which for each of the yarns at least one of a plurality of status parameters is monitored and in which the respective actual values of the status parameters and the respective actual values of the process parameters are conjointly analyzed, wherein at least one target value of one of the process parameters is determined from the actual values of the status parameters and the actual values of the process parameters, and wherein the respective process step is changed in an automated manner for setting the process parameter,
**characterized in that** as a status parameter an occurrence of a yarn breakage on one of the yarns is monitored, and **in that** a quality parameter is determined by a number of yarn breakages per unit mass of yarn.

2. Method according to Claim 1, **characterized in that** the process parameters and the status parameters are continuously monitored, **in that** further target values of the process parameters are determined from the respective actual values of the process parameters and the respective actual values of the status parameters, and **in that** the respective process steps are changed in an automated manner for setting the process parameters.

3. Method according to either of Claims 1 or 2, **characterized in that** the target value of the process parameter is determined by a machine learning program from the actual values of the process parameters and the actual values of the status parameters.

4. Method according to Claim 3, **characterized in that** the process steps and/or the process parameters which are cleared for automated control are specified to the machine learning program.

5. Method according to one of Claims 1 to 4, **characterized in that** a changeover in the process steps that leads to a deterioration of the quality parameter is permissible in a start-up phase of the melt-spinning process.

6. Method according to Claim 5, **characterized in that** the changeover in the process steps that leads to an adherence to or improvement of the quality parameter is permissible upon termination of the start-up phase of the melt-spinning process.

7. Melt-spinning apparatus for producing yarns, having a melt-generation device (1.1), a melt-spinning device (1.2), a treatment device (1.3), and a take-up winding device (1.4) for carrying out a plurality of process steps, having a monitoring device (5) and having a machine control device (4) which for receiving status parameters is connected to the monitoring device (5) for receiving status parameters and to the devices (1.1, 1.2, 1.3, 1.4) for carrying out the process steps, wherein the machine control device (4) has a changeover module (4.2) by way of which there can be generated from the actual values of the status parameters and the actual values of the process parameters at least one control command for changing in an automated manner one of the process steps of one of the devices (1.1, 1.2, 1.3, 1.4) to a target value of one of the process parameters, **characterized in that** the monitoring device (5) has a plurality of yarn breakage sensor devices (5.1) which are connected to the changeover module (4.2), and **in that** as a status parameter an occurrence of a yarn breakage on one of the yarns is monitored, and **in that** a quality parameter is determined by a number of yarn breakages per unit mass of yarn.

8. Melt-spinning apparatus according to Claim 7, **characterized in that** the changeover module (4.2) has a machine learning program by way of which target values of the process parameters can be generated from the actual values of the status parameter and the actual values of the process parameters.

## Revendications

1. Procédé de commande d'un processus de filage par fusion pour la fabrication de fils,
avec lequel plusieurs paramètres de processus de plusieurs étapes de processus d'une génération de masse fondue, d'une extrusion de filament, d'un traitement de fil et d'un enroulement de fil sont surveillés, avec lequel au moins l'un de plusieurs paramètres d'état est surveillé pour chacun des fils et avec lequel les valeurs réelles respectives des paramètres d'état et les valeurs réelles respectives des paramètres de processus sont analysées en commun, au moins une valeur de consigne des paramètres de processus étant déterminée à partir des valeurs réelles des paramètres d'état et des valeurs réelles des paramètres de processus et l'étape de processus concernée étant inversée de manière automatisée en vue de régler le paramètre de processus, **caractérisé en ce qu'**un paramètre d'état surveillé est une survenance d'une rupture de fil au niveau de l'un des fils et **en ce qu'**un paramètre de qualité est déterminé par un nombre de ruptures de fil par masse de fil.

2. Procédé selon la revendication 1, **caractérisé en ce que** les paramètres de processus et les paramètres d'état sont surveillés continuellement, **en ce que** des valeurs de consigne supplémentaires des paramètres de processus sont déterminées à partir à partir des valeurs réelles respectives des paramètres de processus et des valeurs réelles respectives des paramètres d'état et **en ce que** les étapes de processus concernées sont inversées de manière automatisée en vue de régler le paramètre de processus.

3. Procédé selon l'une des revendications 1 ou 2, **caractérisé en ce que** la valeur réelle du paramètre de processus est déterminée par un programme d'apprentissage automatique à partir des valeurs réelles des paramètres de processus et des valeurs réelles des paramètres d'état.

4. Procédé selon la revendication 3, **caractérisé en ce que** les étapes de processus et/ou les paramètres de processus qui sont validés pour une commande automatisée sont prédéfinis pour le programme d'apprentissage automatique.

5. Procédé selon l'une des revendications 1 à 4, **caractérisé en ce que** dans une phase de démarrage du processus de filage par fusion, une inversion des étapes de processus est autorisée, laquelle mène à une dégradation du paramètre de qualité.

6. Procédé selon la revendication 5, **caractérisé en ce qu'**après le déroulement de la phase de démarrage du processus de filage par fusion, l'inversion des étapes de processus est autorisée, laquelle mène à un respect ou une amélioration du paramètre de qualité.

7. Arrangement de filage par fusion destiné à fabriquer des fils avec un dispositif de génération de masse fondue (1.1), un dispositif de filage par fusion (1.2), un dispositif de traitement (1.3) et un dispositif d'enroulement (1.4) destinés à exécuter plusieurs étapes de processus, comprenant un dispositif de surveillance (5) et comprenant un dispositif de commande de machine (4) qui est relié au dispositif de surveillance (5) pour la réception de paramètre d'état et comprenant les dispositifs (1.1, 1.2, 1.3, 1.4) destinés à l'exécution des étapes de processus en vue de recevoir des paramètres de processus,
le dispositif de commande de machine (4) possédant un module d'inversion (4.2) par lequel peut être générée, à partir des valeurs réelles des paramètres d'état et des valeurs réelles des paramètres de processus, au moins une instruction de commande destinée à l'inversion automatisée de l'une des étapes de processus de l'un des dispositifs (1.1, 1.2, 1.3, 1.4) à une valeur de consigne de l'un des paramètres de processus,
**caractérisé en ce que** le dispositif de surveillance (5) possède une pluralité de dispositifs capteurs de rupture de fil (5.1) qui sont reliés au module d'inversion (4.2), et **en ce qu'**un paramètre d'état surveillé est une survenance d'une rupture de fil au niveau de l'un des fils et **en ce qu'**un paramètre de qualité est déterminé par un nombre de ruptures de fil par masse de fil.

8. Arrangement de filage par fusion selon la revendication 7, **caractérisé en ce que** le module d'inversion (4.2) possède un programme d'apprentissage automatique, par lequel les valeurs de consigne des paramètres de processus peuvent être générées à partir des valeurs réelles du paramètre d'état et des valeurs réelles des paramètres de processus.
